# EUROPÄISCHE PATENTANMELDUNG

(11) **EP 4 060 013 A1**
(43) Veröffentlichungstag der Anmeldung: **21.09.2022**
(21) Anmeldenummer: 22154435.6
(22) Anmeldetag: 01.02.2022
(51) Int. Cl.: C12C 7/22, C12C 13/00, C12C 13/02, F25D 17/02, F28D 20/02, F28D 9/00

(54) **BEREITSTELLUNG VON KALTWASSER UND EISWASSER**

(30) Priorität: 17.03.2021 DE 102021106528
(71) Anmelder: KRONES Aktiengesellschaft, 93073 Neutraubling (DE)
(72) Erfinder: KAMMERLOHER, Helmut, 93073 Neutraubling (DE); FRIEDRICH, Michael, 93073 Neutraubling (DE)
(74) Vertreter: Grünecker Patent- und Rechtsanwälte PartG mbB

(57) **Zusammenfassung**

Die vorliegende Erfindung betrifft ein Verfahren zur Bereitstellung von Kaltwasser und Eiswasser zur Getränkeherstellung, insbesondere Bierherstellung, mit den Schritten: Bereitstellen eines Kaltwasser- und Eiswassertanks zum Speichern von Kaltwasser in einem ersten Teilbereich des Kaltwasser- und Eiswassertanks und von Eiswasser in einem zweiten Teilbereich des Kaltwasser- und Eiswassertanks, der von dem ersten Teilbereich verschieden ist, Leiten des Kaltwassers mit einer ersten Temperatur in den ersten und den zweiten Teilbereich des Kaltwasser- und Eiswassertank, wobei die erste Temperatur maximal 35 °C, insbesondere maximal 30 °C, beträgt und Kühlen des eingeleiteten Kaltwassers lediglich in dem zweiten Teilbereich, um lediglich in dem zweiten Teilbereich Eiswasser mit einer zweiten Temperatur bereitzustellen, die niedriger als die erste Temperatur ist und insbesondere 2 °C bis 12 °C oder bis 5 °C beträgt.

## Beschreibung

### Gebiet der Erfindung

Die vorliegende Erfindung betrifft die Bereitstellung von Kaltwasser und Eiswasser für die Herstellung und/oder Abfüllung von Getränken und insbesondere das Brauen von Bier.

### Stand der Technik

Bei der Getränkeherstellung finden verschiedene Aufheiz- und Abkühlvorgänge statt, die einen wesentlichen Kostenfaktor durch den damit verbundenen Energieverbrauch darstellen. Insbesondere müssen für verschiedene Verbraucher und verschiedene Kühlvorgänge Kaltwasser beziehungsweise Eiswasser vorgehalten werden. So werden in Brauereien ein Kaltwassertank zum Speichern von Kaltwasser, beispielsweise mit einer Temperatur zwischen 10 °C und 20 °C, und ein Eiswassertank zum Speichern von Eiswasser, beispielsweise mit einer Temperatur zwischen 2 °C und 5 °C, benötigt. Die Breitstellung solcher Tanks ist jedoch relativ kostenintensiv und neben den hohen Investitionskosten ist der Platzbedarf nachteilig.

Somit liegt der vorliegenden Erfindung die Aufgabe zugrunde, die Bereitstellung von Kaltwasser und Eiswasser in Anlagen zur Getränkeherstellung, insbesondere Brauereien, im Vergleich zum Stand der Technik zu vereinfachen und kostengünstiger zu gestalten.

### Beschreibung der Erfindung

Die oben genannte Aufgabe wird durch ein Verfahren zur Bereitstellung von Kaltwasser und Eiswasser zur Getränkeherstellung, insbesondere Bierherstellung, gelöst, das die Schritte umfasst:
Bereitstellen eines Kaltwasser- und Eiswassertanks zum Speichern von Kaltwasser in einem ersten Teilbereich des Kaltwasser- und Eiswassertanks und von Eiswasser in einem zweiten Teilbereich des Kaltwasser- und Eiswassertanks, der von dem ersten Teilbereich verschieden ist;
Leiten des Kaltwassers mit einer ersten Temperatur in den ersten und den zweiten Teilbereich des Kaltwasser- und Eiswassertank, wobei die erste Temperatur maximal 35 °C (oder beispielsweise maximal 30 °C oder auch nur maximal 25 °C oder 20 °C) beträgt; und
Kühlen des (in den ersten und den zweiten Teilbereich des Kaltwasser- und Eiswassertanks) eingeleiteten Kaltwassers lediglich in dem zweiten Teilbereich, um lediglich in dem zweiten Teilbereich Eiswasser mit einer zweiten Temperatur bereitzustellen, die niedriger als die erste Temperatur ist und insbesondere 2 °C bis 12 °C oder bis 5 °C beträgt.

Alternativ wird das Eiswasser nicht im Kaltwasser- und Eiswassertank durch Kühlen von Kaltwasser hergestellt, sondern es wird das Eiswasser in den Kaltwasser- und Eiswassertank eingeleitet. Somit wird die oben genannte Aufgabe auch durch ein Verfahren zur Bereitstellung von Kaltwasser und Eiswasser zur Getränkeherstellung gelöst, das die Schritte aufweist:
Bereitstellen eines Kaltwasser- und Eiswassertanks zum Speichern von Kaltwasser in einem ersten Teilbereich des Kaltwasser- und Eiswassertanks und von Eiswasser in einem zweiten Teilbereich des Kaltwasser- und Eiswassertanks, der von dem ersten Teilbereich verschieden ist;
Leiten des Kaltwassers mit einer ersten Temperatur in den Kaltwasser- und Eiswassertank, wobei die erste Temperatur maximal 35 °C (oder beispielsweise maximal 30 °C oder auch nur maximal 25 °C oder 20 °C) beträgt; und
Leiten des Eiswassers mit einer zweiten Temperatur lediglich in den zweiten Teilbereich des Kaltwasser- und Eiswassertanks, um lediglich in dem zweiten Teilbereich Eiswasser bereitzustellen, wobei die zweite Temperatur niedriger als die erste Temperatur ist und insbesondere 2 °C bis 12 °C oder bis 5 °C beträgt.

Die beiden oben beschriebenen Verfahren können geeignet miteinander kombiniert werden.

Beispielsweise kann das Einleiten des Eiswassers nach dem Einleiten des Kaltwassers erfolgen, wobei das Eiswasser das zuvor eingeleitete Kaltwasser aus dem zweiten Teilbereich verdrängt.

Erfindungsgemäß wird also ein kombinierter Kaltwasser- und Eiswassertank zum Vorhalten von sowohl Kaltwasser als auch gegenüber dem Kaltwasser kälterem Eiswasser verwendet. Bei dem Kaltwasser kann es sich um Frischwasser oder Brauwasser oder Brauchwasser handeln. Im Gegensatz zum Stand der Technik werden nicht ein Kaltwassertank und ein zusätzlicher separater Eiswassertank benötigt, sondern lediglich ein einziger Tank, wodurch der Platzbedarf, der apparative Aufwand und Wartungsaufwand und somit die Kosten für die Bereitstellung von Kaltwasser und Eiswasser gegenüber dem Stand der Technik deutlich verringert werden können.

Das Kühlen des Kaltwassers in dem zweiten Teilbereich des Kaltwasser- und Eiswassertanks kann ein Leiten von einem Kälteträgermedium, insbesondere von flüssigem CO₂ oder einem Getränk, beispielsweise Bier (insbesondere Bier aus dem Lagerkeller oder einer Anlage zur Bierfiltration/Bierstabilisierung, welches sich zum Beispiel auf dem Weg zur Abfüllung befindet), durch eine oder mehrere in dem ersten und/oder zweiten Teilbereich des Kaltwasser- und Eiswassertanks angeordnete Leitungen (wie zum Beispiel eine Wendelleitung oder eine Zargen- und/oder Bodenkühlfläche) umfassen. Hierdurch kann ein rekuperativer (also nicht von einer Kälteanlage bereitgestellter) Kälteeintrag in den Kaltwasser- und Eiswassertank erfolgen. Alternativ oder zusätzlich kann dieses Kühlen ein Kühlen mithilfe einer Kälteanlage (und eines von dieser gelieferten Kälteträgermediums) umfassen.

Ist hingegen Eiswasser, das in den Kaltwasser- und Eiswassertank eingeleitet wird, außerhalb des Kaltwasser- und Eiswassertanks zu erzeugen, so kann Wasser außerhalb des Kalt- und Eiswassertanks auf Eiswassertemperatur, beispielsweise mithilfe einer Kälteanlage, gekühlt werden. Das außerhalb des Kalt- und Eiswassertanks auf Eiswassertemperatur zu kühlende Wasser kann von dem Kalt- und Eiswassertank geliefert werden.

Wenn Wasser außerhalb des Kalt- und Eiswassertanks auf die Eiswassertemperatur gekühlt wird, dann kann es vorteilhaft sein, wenn das Wasser in einem ersten Schritt, zum Beispiel in einem Wärmetauscher, rekuperativ, zum Beispiel mit Bier, gekühlt wird und in einem zweiten Schritt, zum Beispiel in einem Wärmetauscher, mit einem Kälteträgermedium, welches von der Kälteanlage stammt, gekühlt wird. So kann der Energiebedarf der Kälteanlage reduziert werden, da das Wasser bereits durch das kalte Bier, welches sich zum Beispiel auf dem Weg zur Abfüllung befindet, gekühlt wird, und die Kälteanlage das Wasser in einem nachfolgenden Schritt nur noch kühlen muss, wenn kein rekuperatives Kälteträgermedium, wie beispielsweise Bier vorliegt, oder die Temperatur, auf welche das Bier das Wasser kühlt nicht der geforderten Eiswassertemperatur entspricht.

Der erste Wärmetauscher, welcher das Kaltwasser zum Beispiel mit einem rekuperativen Kälteträgermedium, wie beispielsweise, Bier kühlt und der zweite Wärmetauscher, welcher das Wasser mit einer Kälteanlage, also mit einem Kälteträgermedium einer Kälteanlage kühlt, können in Reihe geschalten werden. Möglich ist auch, dass eine Kälteanlage das Wasser im zweiten Teilbereich des Kaltwasser- und Eiswassertanks kühlt und zusätzlich das Wasser vom zweiten Teilbereich des Kaltwasser- und Eiswassertanks über einen Wärmetauscher, welcher sich außerhalb des Kaltwasser- und Eiswassertanks befindet, im Kreislauf umgepumpt wird und mit einem rekuperativem Kälteträgermedium, wie beispielsweise Bier, gekühlt wird. Bevorzugt wird dann mit dem rekuperativen Kälteträgermedium gekühlt und, nur wenn die geforderte Eiswassertemperatur nicht erreicht wird, mit der Kälteanlage.

Auch wenn hier beschrieben wurde, dass das Eiswasser im Kaltwasser- und Eiswassertank mit einer Kälteanlage und außerhalb mit einem rekuperativen Kälteträgermedium wie Bier gekühlt wird, so kann die Anordnung auch umgekehrt gewählt werden, sodass das Wasser innerhalb des Kaltwasser- und Eiswassertanks mit einem rekuperativen Kälteträgermedium wie Bier und außerhalb mit einer Kälteanlage gekühlt wird.

Die oben beschriebenen Verfahren können weiterhin den Schritt des Ausleitens des Kaltwassers aus einem ersten Auslass des ersten Teilbereichs (Kaltwasserbereichs) des Kaltwasser- und Eiswassertanks und den Schritt des Zuführens des ausgeleiteten Kaltwassers zu einer ersten Vorrichtung (beispielsweise zum Verbrauch in der Vorrichtung oder zur Kühlung eines von ihr bearbeiteten/gelieferten Mediums), wobei die erste Vorrichtung einen Wärmetauscher umfassen kann und insbesondere ein Würzevorkühler, Maischekühler, eine Schrotmühle, Einmaischvorrichtung, ein Maischgefäß, Maischefilter, Läuterbottich, eine Würzepfanne, Einrichtung zum Entgasen von Wasser, eine Flaschenreinigungsmaschine oder eine Reinigungsanlage sein kann, umfassen. Prinzipiell kann die erste Vorrichtung jeglicher Kaltwasserverbraucher mit Verbindung zum Kaltwasser- und Eiswassertank einer Brauerei oder einer Anlage zur Getränkeherstellung und/oder Getränkeabfüllung sein.

Weiterhin kann das Eiswasser aus einem zweiten Auslass des zweiten Teilbereichs des Kaltwasser- und Eiswassertanks ausgeleitet werden, und es kann das ausgeleitete Eiswasser einer zweiten Vorrichtung, die von der ersten Vorrichtung verschieden sein kann, zugeführt werden, wobei die zweite Vorrichtung insbesondere ein Würzekühler oder eine Einrichtung zum Entgasen von Wasser oder ein Maischekühler oder ein Würzevorkühler sein kann. So können verschiedene zu kühlende Vorrichtungen (beziehungsweise deren zu kühlende Medien) einer Anlage zur Getränkeherstellung effizient unter Verwendung des von dem kombinierten Kaltwasser- und Eiswassertank gelieferten Wassers gekühlt werden. Die Kühlung kann insbesondere mithilfe von herkömmlichen Wärmetauschern erfolgen.

Das ausgelassene Eiswasser kann beispielsweise zur Würzekühlung in einer Brauerei verwendet werden. In dem zweiten Teilbereich (Eiswasserbereich) des Kaltwasser- und Eiswassertanks kann beispielsweise ein Volumen an Eiswasser vorgehalten werden, das zur Würzekühlung mindestens (beispielsweise genau) eines Suds oder von mindestens (beispielsweise genau oder auch maximal) eineinhalb, zwei oder drei Suden ausreicht. Gemäß einer Alternative kann zu Beginn der Würzekühlung von mindestens einem oder mindestens eineinhalb Suden (beziehungsweise maximal eineinhalb Suden) nur ein Teil des zur Kühlung von dem mindestens einen oder mindestens eineinhalb Suden benötigten Volumens an Eiswasser im Kaltwasser- und Eiswassertank vorliegen und der restliche benötigte Teil im Verlauf der Würzekühlung im Kaltwasser- und Eiswassertank erzeugt (durch weiteres Einleiten von Eiswasser und/oder Kühlen von Kaltwasser) und aus dem Kaltwasser- und Eiswassertank zur Würzekühlung ausgelassen werden. So wird es beispielsweise ermöglicht, eine Kälteanlage, die zur Erzeugung von Eiswasser (innerhalb und/oder außerhalb des Kaltwasser- und Eiswassertanks) verwendet wird, mit gleichmäßiger Last zu betreiben. Gemäß einer anderen Alternative liegt zu Beginn der Würzekühlung bereits das gesamte benötige Volumen an Eiswasser vor.

Es können auch im ersten Teilbereich des Kaltwasser- und Eiswassertanks mehr als ein erster Auslass an verschiedenen Höhen und/oder im zweiten Teilbereich des Kaltwasser- und Eiswassertanks mehr als ein zweiter Auslass an verschiedenen Höhen vorgesehen sein. Beispielsweise wird zur Würzekühlung mithilfe des in dem Kaltwasser- und Eiswassertank gespeicherten Eiswassers ein relativ großes Volumen des Eiswassers aus dem zweiten Teilbereich abgezogen, sodass der Pegel (d.h. der Flüssigkeitsfüllstand) insgesamt im Kaltwasser- und Eiswassertanks deutlich sinken kann (wenn zeitgleich nicht genügend Wasser in den Tank zugeführt wird), sodass eventuell kein Kaltwasser mehr aus dem ersten Teilbereich über einen relativ hoch angebrachten (oberhalb des abgesenkten Pegels) ersten Auslass abgezogen werden kann. Dieses kann dann über einen weiteren weiter unten (etwa auf oder unterhalb der Höhe eines Kalt-/Frisch- /Brau-/Brauchwassereinlasses) angebrachten ersten Auslass oder auch den zweiten Auslass erfolgen.

Gemäß einer Weiterbildung kann in sämtlichen oben beschriebenen Beispielen dem Kaltwasser in dem ersten Teilbereich thermische Energie zugeführt werden, die insbesondere rekuperierte thermische Energie sein kann, die von einer Vorrichtung einer Anlage zur Getränkeherstellung (beispielsweise die Kondensatkühlung eines Pfannendunstkondensators) gewonnen wird. Beispielsweise kann das Kaltwasser zumindest teilweise in dem ersten Teilbereich mithilfe der rekuperierten thermischen Energie erwärmt werden, oder es kann mithilfe der rekuperierten thermischen Energie erwärmtes Wasser in den ersten Teilbereich des Kaltwasser- und Eiswassertanks eingeleitet werden. So kann beispielsweise in einem unteren Bereich des Kaltwassertanks Eiswasser, in einem mittleren Bereich gegenüber dem Eiswasser wärmeres Kaltwasser und in einem oberen Bereich gegenüber dem Kaltwasser des mittleren Bereichs wärmeres (durch die zugeführte rekuperierte thermische Energie erwärmtes) Kaltwasser gespeichert werden. Die maximale Temperatur, auf die das Kaltwasser zumindest teilweise in dem ersten Teilbereich durch die zugeführte thermische Energie erwärmt wird, kann beispielsweise maximal 50 °C oder maximal 40 °C betragen.

Die oben genannte Aufgabe wird auch durch Bereitstellen einer Anlage zur Getränkeherstellung, insbesondere Bierherstellung gelöst, die einen Kaltwasser- und Eiswassertank und eine Steuerungs-/Regeleinrichtung, die dazu ausgebildet ist, das Verfahren gemäß einer der oben beschriebenen Weiterbildungen auszuführen, umfasst.

Weiterhin wird eine Anlage zur Bierherstellung, insbesondere oben genannte Anlage, bereitgestellt die einen Kaltwasser- und Eiswassertank mit einem ersten Teilbereich und einem zweiten Teilbereich, der von dem ersten Teilbereich verschieden ist, umfasst. Der Kaltwasser- und Eiswassertank dient dem Speichern von Kaltwasser mit einer ersten Temperatur von maximal 35 °C (oder beispielsweise maximal 30 °C oder auch nur maximal 25 °C oder 20 °C), in dem ersten Teilbereich des Kaltwasser- und Eiswassertanks und dem Speichern von Eiswasser mit einer zweiten Temperatur, die niedriger als die erste Temperatur ist und insbesondere 2 °C bis 12 °C oder bis 5 °C beträgt, in dem zweiten Teilbereich des Kaltwasser- und Eiswassertanks. Insbesondere kann die zweite Temperatur in dem Bereich von 1 °C bis 12°C oder 1 °C bis 10 °C oder 1 °C bis 6 °C liegen.

Der Kaltwasser- und Eiswassertank kann hierbei in dem ersten Teilbereich einen ersten Auslass zum Ausleiten des Kaltwassers aus dem ersten Teilbereich und einen zweiten Auslass zum Ausleiten des Eiswassers aus dem zweiten Teilbereich umfassen. Es kann auch im ersten Teilbereich mehr als ein erster Auslass an verschiedenen Höhen und/oder im zweiten Teilbereich mehr als ein zweiter Auslass an verschiedenen Höhen vorgesehen sein. In dem Kaltwasser- und Eiswassertank können auch Einbauten zum Einlagern und Auslagern von Kaltwasser und Eiswasser vorhanden sein. Die Einbauten können eine oder mehrere Ladelanzen, beispielsweise ein oder mehrere Lochblechrohre oder gelochte Rohre oder Variationen beispielsweise mit Schlitzen, jedoch in jeder Ausführung mit geeignetem Strömungsverhalten, umfassen.

Weiterhin kann die Anlage die oben im Zusammenhang mit dem erfindungsgemäßen Verfahren beschriebenen ersten und zweiten Vorrichtung umfassen, also beispielsweise einen Würzekühler, Würzevorkühler, Maischekühler eine Schrotmühle, Einmaischvorrichtung, ein Maischgefäß, Maischefilter, Läuterbottich, eine Würzepfanne, eine Vorrichtung zur Heißtrubentfernung, Einrichtung zum Entgasen von Wasser, eine Flaschenreinigungsmaschine oder eine Reinigungsanlage. Diesen Vorrichtungen kann das Kaltwasser oder Eiswasser aus dem Kaltwasser- und Eiswassertank zugeführt werden. Prinzipiell kann die erste Vorrichtung jeglicher Kaltwasserverbraucher mit Verbindung zum Kaltwasser- und Eiswassertank einer Brauerei oder einer Anlage zur Getränkeherstellung und/oder Getränkeabfüllung sein.

Die Anlage kann weiterhin a) eine Kälteanlage zum Kühlen des in dem zweiten Teilbereich des Kaltwasser- und Eiswasserstanks zu speichernden Eiswassers außerhalb des Kaltwasser- und Eiswasserstanks und/oder eine Kälteanlage zum Kühlen des Kaltwassers in dem zweiten Teilbereich des Kaltwasser- und Eiswasserstanks, um dort Eiswasser zu erzeugen, oder b) eine Einrichtung zum Zuführen von flüssigem CO₂ (um die beim Übergang des flüssigen CO₂ in die gasförmige Phase entstehende Verdunstungskälte in den zweiten Teilbereich des Kaltwasser- und Eiswassertanks einzutragen) oder Bier oder einem anderen Kälteträgermedium, wobei der Kaltwasser- und Eiswasserstank eine in dem zweiten Teilbereich angeordnete Leitung umfasst, die mit der Einrichtung zum Zuführen von flüssigem CO₂ oder Bier oder einem anderen Kälteträgermedium verbunden ist, umfassen.

Wenn mit rekuperativen Kälteträgermedien, wie etwa Bier, welches sich zum Beispiel auf dem Weg zur Abfüllung befindet, gekühlt wird, kann der Kaltwasser- und Eiswassertank auch als Kältesenke fungieren. Somit kann der Kaltwasser- und Eiswassertank nicht nur zum Liefern von zu verbrauchendem Kaltwasser und zu Kühlzwecken dienen, sondern auch eine durch den kombinierten Kaltwasser- und Eiswassertank bereitgestellte Kältesenke zur Zwischenspeicherung und Rückhaltung von Kälteenergie im System und damit verbunden allgemein eine Verbesserung des Wasserhaushalts beziehungsweise eine Reduktion des Energiebedarfs bereitstellen.

Die Anlage kann eine Temperaturmesseinrichtung zum Messen der Temperatur des Kaltwassers und Eiswassers im Kaltwasser- und Eiswassertank (beispielsweise separat in unterschiedlichen Teilbereichen des Kaltwasser- und Eiswassertanks) und/oder beim Zuführen und/oder nach dem Verlassen des Kaltwasser- und Eiswassertanks umfassen.

Weiterhin kann eine Steuerungs-/Regeleinrichtung das Kaltwasservolumen und Eiswasservolumen im Kaltwasser- und Eiswassertank steuern/regeln/überwachen, insbesondere um eine zur Kühlung verwendete Kälteanlage, die nur so viel Volumen kühlen muss, wie benötigt wird, entsprechend zu steuern/regeln.

Insbesondere wird der Eiswasserbereich des Kaltwasser- und Eiswassertanks nicht zwangsläufig immer das gleiche Volumen aufweisen. Mithilfe der Steuerungs-/Regeleinrichtung kann man den Verbrauch von Kaltwasser und Eiswasser vorhersagen/steuern und somit die vorgehaltenen Volumina individuell und variabel anpassen. Wenn zum Beispiel keine Würze hergestellt wird (also kein Eiswasser für die Würzekühlung benötigt wird) aber Bier abgefüllt und zum Beispiel die Sudhausanlage (zum Beispiel der Läuterbottich) gereinigt wird, so benötigt man kein Eiswasser, dafür aber eventuell relativ viel Kaltwasser. Derartige Situationen lassen sich gut mithilfe der Steuerungs-/Regeleinrichtung handhaben.

Im Folgenden werden Ausführungsformen eines erfindungsgemäßen Verfahrens unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht ein Verfahren zur Bereitstellung von Kaltwasser und Eiswasser zur Getränkeherstellung gemäß einer Ausführungsform der vorliegenden Erfindung.
Figur 2 veranschaulicht ein weiteres Verfahren zur Bereitstellung von Kaltwasser und Eiswasser zur Getränkeherstellung gemäß einer weiteren Ausführungsform der vorliegenden Erfindung.
Figur 3 veranschaulicht eine Anlage zur Getränkeherstellung mit einem Kaltwasser- und Eiswassertank gemäß einer Ausführungsform der vorliegenden Erfindung.
Figur 4 veranschaulicht eine Anlage zur Getränkeherstellung mit einem Kaltwasser- und Eiswassertank gemäß einer weiteren Ausführungsform der vorliegenden Erfindung.

Erfindungsgemäß werden Kaltwasser und Eiswasser, wie sie zur Getränkeherstellung, beispielsweise in einer Brauerei, benötigt werden, in einem kombinierten Kaltwasser- und Eiswassertank vorgehalten, sodass kein separater Tank, der nur für die Speicherung von Eiswasser Verwendung finden würde, benötigt wird.

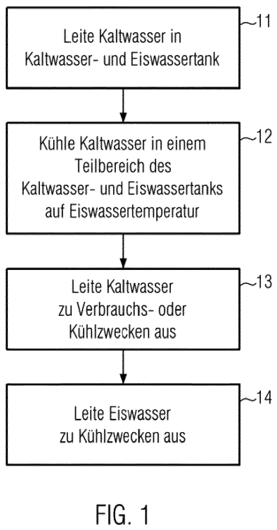

Eine Ausführungsform eines erfindungsgemäßen Verfahrens zur Bereitstellung von Kaltwasser und Eiswasser in einer Anlage zur Getränkeherstellung, insbesondere in einer Brauerei, ist in Figur 1 veranschaulicht. Kaltwasser wird in einen Kaltwasser- und Eiswassertank geleitet 11. Bei dem Kaltwasser kann es sich um Frischwasser oder Brauwasser oder Brauchwasser handeln.

Frischwasser ist Wasser, welches zum Beispiel aus einer (eigenen) Quelle, einem (eigenen) Brunnen oder Oberflächengewässer (beispielsweise See oder Fluss) stammt; es kann auch von einem Wasserversorger stammen. Das Frischwasser kann unbehandelt zum Beispiel direkt von einer Quelle oder Brunnen stammen oder es kann mittels Wasseraufbereitung aufbereitet werden (biologisch durch Abtötung von Keimen z. B. durch UV-Strahlen und/oder chemisch/technisch beispielsweise zur Reduzierung der Karbonathärte durch eine Kalkfällungsanlage). Das Wasser wird dann als Brauwasser (zur Herstellung von Bier oder anderen Getränken, sprich Wasser welches in das Produkt eingeht) oder Brauchwasser (Wasser zum Beispiel zum Spülen oder Reinigen von Behälter und Leitungen zur Bier- oder Getränkeherstellung, sprich Wasser, welches nicht in das Produkt eingeht, jedoch jegliches Wasser ist, welches in der Brauerei- oder Getränkeherstellung verwendet wird, also zum Beispiel auch Wasser, welches als Wärmeträgermedium in einem Energiespeichertank eingesetzt wird) verwendet. Bei Brauwasser kann es sich prinzipiell auch um Brauchwasser handeln (d.h. Brauwasser kann beispielsweise auch für die Reinigung beispielsweise für Behälter oder Leitungen verwendet werden, beziehungsweise, wenn Brauchwasser die erforderliche Wasserqualität aufweist, kann Brauchwasser auch als Brauwasser, also zur Herstellung von Bier oder Getränken verwendet werden); denkbar ist auch, dass das Wasser erst nach dem Kaltwasser- und Eiswassertank aufbereitet oder zusätzlich nochmals aufbereitet wird. Möglich ist auch, dass das Abwasser in einer Brauerei und/oder in einem Getränkeherstellungsbetrieb so aufbereitet wird, dass es wieder als Frischwasser eingespeist werden kann.

Die Temperatur des in den Kaltwasser- und Eiswassertank eingeleiteten Kaltwassers beträgt maximal 35 °C oder 30 °C oder auch nur maximal 25 °C oder 20 °C, und sie liegt beispielsweise oberhalb von 5 °C. Beispielsweise kann sie zwischen 10 °C und 15 °C liegen.

In einem (typischerweise unteren) Teilbereich des Kaltwasser- und Eiswassertanks wird das eingeleitete Kaltwasser auf Eiswassertemperatur, beispielsweise auf 2 °C bis 12 °C oder bis 5 °C, abgekühlt (siehe Schritt 12 in Figur 1). Die Abkühlung 12 kann mithilfe einer Kälteanlage erfolgen, die ein Kälteträgermedium liefert, das durch eine entsprechende in dem Kaltwasser- und Eiswassertank angeordnete Leitung beziehungsweise einen Wärmetauscher oder einen Teil der Zarge als Kühlfläche strömt und das Kaltwasser abkühlt. Alternativ oder zusätzlich kann ein Kälteträgermedium zum Kühlen 12 verwendet werden, dass nicht von einer Kälteanlage geliefert wird, beispielsweise Bier aus dem Lagerkeller oder flüssiges CO₂. Jedenfalls wird in der in Figur 1 veranschaulichten Ausführungsform durch die Kühlung 12 in einem Teilbereich des Kaltwasser- und Eiswassertanks (im Eiswasserbereich) Eiswasser bereitgestellt, während in einem anderen Teilbereich (im Kaltwasserbereich) des Kaltwasser- und Eiswassertanks Kaltwasser mit einer gegenüber dem Eiswasser höheren Temperatur vorgehalten wird.

Das in dem Kaltwasser- und Eiswassertank bereitgestellte Kaltwasser und Eiswasser kann zur Getränkeherstellung/-abfüllung wie etwa zur Bierherstellung beziehungsweise der Reinigung von Anlagen zur Getränkeherstellung/-abfüllung, etwa von bearbeiteten Behältern oder Leitungen, und zu Kühlzwecken Verwendung finden. So wird bei Bedarf Kaltwasser aus dem Kaltwasserbereich des Kaltwasser- und Eiswassertanks vorwiegend zur Herstellung (beispielhaft bei der Bierherstellung als Einmaischwasser oder Anschwänzwasser) und/oder Abfüllung (beispielhaft Wasser für eine Flaschenreinigungsmaschine) von Getränken oder zur Reinigung dieser Anlagen (beispielhaft Wasser für die Reinigung von Behälter mittels einer CIP-Anlage) ausgelassen 13. Kaltwasser kann jedoch auch für Kühlzwecke (beispielhaft zur Kühlung von Maische für einen Maischekühler) ausgelassen werden 13. Wenn sich das durch das Abkühlen des Mediums erwärmte Kaltwasser nicht zu stark erwärmt, kann es auch wieder in den Kaltwasser- und Eiswassertank zurückgeführt werden. In dem Kaltwasser- und Eiswassertank soll jedoch maximal eine Temperatur von 50 °C oder maximal 40 °C vorliegen, und es wird Eiswasser aus dem Eiswasserbereich des Kaltwasser- und Eiswassertanks vorwiegend zu Kühlzwecken (oder auch zu anderen Zwecken, beispielhaft wenn eine Maischekühlung durch Zubrühen von Eiswasser zum Produkt, also zur Maische, vorwiegend zu einer Rohfruchtmaische erfolgt oder Eiswasser im sogenannten "High gravity"-Brauverfahren zum Blenden von Bier benötigt wird) ausgelassen 14. Auch wenn das Eiswasser für Kühlzwecke verwendet wird, so kann es nach dem Kühlprozess, in dem es erwärmt wird, auch zur Getränkeherstellung wie etwa zur Bierherstellung beziehungsweise der Reinigung von Behälter oder Leitungen verwendet werden. Nach dem Erwärmen kann das Wasser einem Warmwassertank zugeführt werden. Für das Auslassen des Kaltwassers 13 und das Auslassen des Eiswassers 14 können in den verschiedenen Teilbereichen des Kaltwasser- und Eiswassertanks jeweils ein oder mehrere Auslässe vorgesehen sein. Das ausgelassene Eiswasser kann beispielsweise zur Würzekühlung in einer Brauerei verwendet werden. In dem Eiswasserbereich des Kaltwasser- und Eiswassertanks kann beispielsweise ein Volumen an Eiswasser vorgehalten werden, das zur Würzekühlung mindestens eines Suds oder von mindestens eineinhalb Suden oder maximal eineinhalb Suden ausreicht. Hierbei kann bereits das gesamte benötigte Volumen zu Beginn der Würzekühlung im Kaltwasser- und Eiswassertank vorliegen, oder es kann ein Teil davon zu Beginn der Würzekühlung vorliegen und ein weiterer benötigter Teil im Verlauf der Würzekühlung bereitgestellt werden.

Die Temperatur des Kaltwassers sowie des Eiswassers im Kaltwasser- und Eiswassertank oder bei Zuführen beziehungsweise nach Verlassen des Kaltwasser- und Eiswassertanks kann durch eine geeignete Temperaturmesseinrichtung gemessen werden.

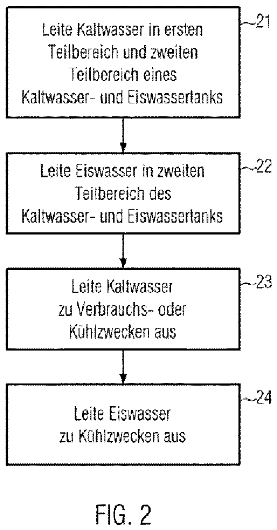

Eine zu der in Figur 1 gezeigten alternative Ausführungsform des erfindungsgemäßen Verfahrens zur Bereitstellung von Kaltwasser und Eiswasser ist in Figur 2 veranschaulicht. In Schritt 21 wird Kaltwasser in einen ersten (beispielsweise oberen) Teilbereich und einen zweiten (beispielsweise unteren) Teilbereich eines Kaltwasser- und Eiswassertanks über einen entsprechenden Einlass des Kaltwasser- und Eiswassertanks eingeleitet.

Danach wird über den Einlass Eiswasser lediglich in den zweiten Teilbereich eingeleitet 22, wobei es Kaltwasser aus diesem Teilbereich verdrängt. Es können auch verschiedene Einlässe für das Kaltwasser und das Eiswasser vorgesehen sein. Die Temperatur des in den Kaltwasser- und Eiswassertank eingeleiteten Kaltwassers beträgt maximal 35 °C oder 30 °C oder auch nur maximal 25 °C oder 20 °C, und sie liegt beispielsweise oberhalb von 5 °C. Beispielsweise kann sie zwischen 10 °C und 15 °C liegen. Die Temperatur des in den Kaltwasser- und Eiswassertank eingeleiteten Eiswassers beträgt beispielsweise 2 °C bis 12 °C oder bis 5 °C. Qualitativ kann es sich bei dem Kaltwasser und dem Eiswasser um das gleiche Wasser, beispielsweise das oben genannte Frischwasser oder Brauwasser oder Brauchwasser, handeln, wobei das Eiswasser außerhalb des Kaltwasser- und Eiswassertanks eine Kühlung, beispielsweise mithilfe einer Kälteanlage, erfahren hat (das Wasser kann dafür zum Beispiel vorab dem Kaltwasser- und Eiswassertank entzogen und nach der Kühlung wieder in den Tank zurück geführt werden; es kann aus dem ersten Teilbereich oder dem zweiten Teilbereich des Kaltwasser- und Eiswassertank abgezogen werden). Natürlich kann auch das Kaltwasser vor dem Einleiten 21 in den ersten Teilbereich des Kaltwasser- und Eiswassertanks gekühlt werden. Auch wenn wie mit Figur 2 beschrieben Kaltwasser in einen ersten (beispielsweise oberen) Teilbereich und einen zweiten (beispielsweise unteren) Teilbereich eines Kaltwasser- und Eiswassertanks über einen entsprechenden Einlass des Kaltwasser- und Eiswassertanks eingeleitet wird, so kann es auch sein das dem Kaltwasser- und Eiswassertank Kaltwasser nur im ersten (beispielsweise oberen) Teilbereich zugeführt wird, nachdem Eiswasser in den zweiten Teilbereich eingefüllt wurde.

Wie in der in Figur 1 veranschaulichten Ausführungsform wird bei Bedarf Kaltwasser aus dem Kaltwasserbereich des Kaltwasser- und Eiswassertanks zum Verbrauch oder Kühlzwecken ausgelassen 23, und es wird Eiswasser aus dem Eiswasserbereich des Kaltwasser- und Eiswassertanks zu Kühlzwecken (oder auch zu anderen Zwecken) ausgelassen 24. Für das Auslassen des Kaltwassers 23 und das Auslassen des Eiswassers 24 können in den verschiedenen Teilbereichen des Kaltwasser- und Eiswassertanks jeweils ein oder mehrere Auslässe vorgesehen sein. Das ausgelassene Eiswasser kann beispielsweise zur Würzekühlung in einer Brauerei verwendet werden. In dem Eiswasserbereich des Kaltwasser- und Eiswassertanks kann beispielsweise ein Volumen an Eiswasser vorgehalten werden, das zur Würzekühlung mindestens eines Suds oder von mindestens eineinhalb Suden ausreicht.

Die Temperatur des Kaltwassers sowie des Eiswassers kann wiederum im Kaltwasser- und Eiswassertank oder bei Zuführen beziehungsweise nach Verlassen des Kaltwasser- und Eiswassertanks durch eine geeignete Temperaturmesseinrichtung gemessen werden.

Die oben beschriebenen Verfahren können optional noch dadurch ergänzt werden, dass in einem oberen Teilbereich des Kaltwasser- und Eiswassertanks das Kaltwasser mithilfe rekuperativ gewonnener thermischer Energie erwärmt wird oder dem oberen Teilbereich des Kaltwasser- und Eiswassertanks mithilfe rekuperativ gewonnener thermischer Energie erwärmtes Kaltwasser zugeführt wird. Dieses gegenüber dem zuvor beschriebenen erwärmte Kaltwasser kann dann ebenfalls, beispielsweise zum Verbrauch (beispielsweise als Einmaisch- oder Anschwänzwasser) oder zu Kühlzwecken, über einen entsprechenden Auslass ausgelassen werden.

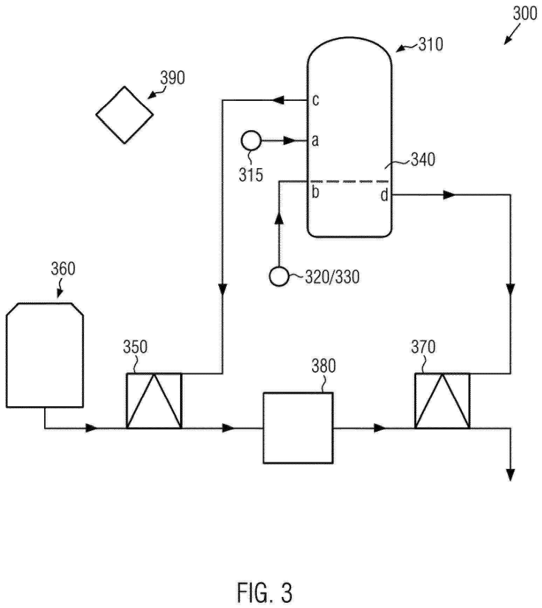

Eine Anlage 300 zur Getränkeherstellung (beispielsweise eine Brauerei) mit einem Kaltwasser- und Eiswassertank 310, in der die oben beschriebenen Verfahren ausgeführt werden können, ist in Figur 3 veranschaulicht. Der Kaltwasser- und Eiswassertank 310 weist eine Einlass a auf, über den Kaltwasser aus einer Kaltwasserquelle 315 in den Kaltwasser- und Eiswassertank 310 eingeleitet werden kann. Weiterhin kann eine Quelle 320 für Eiswasser vorgesehen sein, die über einen weiteren Einlass b Eiswasser in den Kaltwasser- und Eiswassertank 310 liefert. Der Einlass b kann, anders als in Figur 3 gezeigt, alternativ an den ersten Teilbereich des Kaltwasser- und Eiswassertank 310 angeschlossen sein. Die Eigenschaften des Kaltwassers und des Eiswassers sind die gleichen, wie sie oben mit Bezug auf die Figuren 1 und 2 beschrieben sind. Es kann auch ein einziger Einlass für das Einleiten sowohl des Kaltwassers als auch des Eiswassers in den Kaltwasser- und Eiswassertank 310 vorgesehen sein.

In einer alternativen Ausführungsform wird kein Eiswasser in den Kaltwasser- und Eiswassertank 310 geliefert, sondern es wird ein Teil des in den Kaltwasser- und Eiswassertank 310 gelieferten Kaltwassers auf Eiswassertemperatur gekühlt. Hierzu ist dann eine Quelle 330 für ein Kälteträgermedium vorgesehen, die das Kälteträgermedium durch einen Einlass b in eine im Kaltwasser- und Eiswassertank 310 angeordnete Leitung (beispielsweise Wendelleitung oder Zargen- und/oder Bodenkühlfläche) 340 liefert, sodass das Kaltwasser in der Umgebung der Leitung 340 gekühlt wird. Die Quelle 330 für das Kälteträgermedium kann eine Kälteanlage sein. Die Quelle 330 für das Kälteträgermedium kann beispielsweise eine Einrichtung zur Förderung von flüssigem CO₂ oder Bier aus dem Lagerkeller oder Bier nach einer Filtration oder ein Getränk vor der Abfüllung oder ein anderes Kälteträgermedium sein. Wenn eine Quelle 320 für Eiswasser vorgesehen ist, die über einen Einlass b Eiswasser in den Kaltwasser- und Eiswassertank 310 liefert, dann kann das bedeuten, dass Kaltwasser von einer Kaltwasserquelle 315 einer Kälteanlage beziehungsweise einer rekuperativen Kühlmöglichkeit zugeführt wird und Kaltwasser mit einem Kälteträgermedium außerhalb des Kaltwasser- und Eiswassertanks 310 gekühlt wird oder das Kaltwasser oder Eiswasser aus dem ersten Teilbereich oder zweiten Teilbereich des Kaltwasser- und Eiswassertanks 310 abgezogen und einer Kälteanlage_beziehungsweise einer rekuperativen Kühlmöglichkeit zugeführt wird und das Kaltwasser oder Eiswasser außerhalb des Kaltwasser- und Eiswassertanks mittels einem Wärmetauscher gekühlt wird.

Weiterhin umfasst der Kaltwasser- und Eiswassertank 310 einen Auslass c zum Ausleiten des in dem Kaltwasser- und Eiswassertank 310 gespeicherten Kaltwassers und einen Auslass d zum Ausleiten des in dem Kaltwasser- und Eiswassertank 310 gespeicherten Eiswassers.

Im unteren Bereich des Kaltwasser- und Eiswassertanks 310, beispielsweise in der Nähe des Bodens oder am Boden, kann eine Druck- und/oder Flüssigkeitsniveau-Messeinrichtung vorgesehen sein. Eine Flüssigkeitsniveau-Messeinrichtung kann sich zusätzlich oder alternativ auch in der Zarge des Kaltwasser- und Eiswassertanks 310 befinden. Wenn die Füllmenge des in dem Kaltwasser- und Eiswassertank 310 gespeicherten Kaltwassers und Eiswassers nach Ausleiten des Kaltwassers und/oder Eiswassers unter ein unteres Niveau fällt, kann ein geregeltes Einleiten von Kaltwasser und/oder Eiswasser veranlasst werden, beispielsweise bis das Kaltwasser ein oberes Niveau des Füllstands erreicht.

Das in dem Kaltwasser- und Eiswassertank 310 vorgehaltene Kaltwasser beziehungsweise Eiswasser kann zu Verbrauchs- beziehungsweise Kühlzwecken Vorrichtungen der Anlage, beispielsweise den in Figur 3 gezeigten Vorrichtungen 360 beziehungsweise 380, oder mit solchen Vorrichtungen verbundenen oder von diesen Vorrichtungen umfassten Wärmetauschern, beispielsweise den in Figur 3 gezeigten Wärmetauschern 350 und 370, zugeleitet werden. Die Wärmetauscher 350 und 370 können also insbesondere Teile von Vorrichtungen sein, denen das Kaltwasser beziehungsweise Eiswasser zu Kühlzwecken zugeleitet wird, wobei diese Vorrichtungen von den Vorrichtungen 360 und 380 verschieden sein können oder auch nicht. So kann beispielsweise ein in der Vorrichtung 360 erwärmtes Medium (zum Beispiel Maische aus einem Maischgefäß, beispielhaft einem Rohfruchtkocher 360) mithilfe von über den Auslass c des Kaltwasser- und Eiswassertanks 310 ausgeleiteten Kaltwassers über den Wärmetauscher 350 (zum Beispiel einen Maischekühler, der den Wärmetauscher 350 umfasst oder darstellt) gekühlt werden. Das dabei erwärme Kaltwasser kann dann, insofern dadurch die Temperatur im Kaltwasser- und Eiswassertank 310 nicht über maximal 50 °C oder maximal 40 °C steigt, wieder dem Kaltwasser- und Eiswassertank 310 zugeführt werden (nicht dargestellt). Alternativ kann es auch einem anderen Tank, wie beispielhaft einem Warmwassertank zugeführt werden (nicht dargestellt). Andererseits kann ein in der Vorrichtung 380 bearbeitetes Medium (zum Beispiel Würze aus einer Heißtrubabscheidung, beispielhaft einem Whirlpool 380) mithilfe von über den Auslass d des Kaltwasser- und Eiswassertanks 310 ausgeleiteten Eiswassers über den Wärmetauscher 370 (zum Beispiel einem Würzekühler 370) gekühlt werden; das dabei erwärme Eiswasser kann dann in einem Warmwassertank zwischengelagert werden (nicht dargestellt). Hierbei können die Vorrichtungen 360 und 380 einander nachgeschaltet sein (oder auch nicht), zum Beispiel, wenn die Vorrichtung 360 eine Würzepfanne 360, der Wärmetauscher 350 ein Würzevorkühler 350, die Vorrichtung 380 ein Whirlpool 380 und der Wärmetauscher 370 ein Würzekühler 370 ist. In diesem Fall wird die heiß gehaltene beziehungsweise gekochte Würze aus der Würzepfanne 360 im Würzevorkühler 350 auf eine Temperatur gekühlt (auf etwa 85 °C), bei welcher im Whirlpool 380 keine relevante DMS-Nachbildung erfolgt. Nach einer Rast im Whirlpool von etwa 15-30 Minuten wird in einem solchen Fall die Würze im Würzekühler 370 auf Anstelltemperatur gekühlt und zum Beispiel in den Gärkeller geleitet. Bei dem in dem Wärmetauscher 350 mithilfe des Kaltwassers gekühlten Medium kann es sich um dasselbe Medium handeln, das in dem Wärmetauscher 370 mithilfe des Eiswassers gekühlt wird oder auch nicht.

Beispiele für die Vorrichtung 360 oder eine Vorrichtung, die den Wärmetauscher 350 umfasst, sind hierbei ein Würzevorkühler, Maischekühler, eine Schrotmühle, Einmaischvorrichtung, ein Maischgefäß, Maischefilter, Läuterbottich, eine Würzepfanne, Wasserentgasungsanlage, eine Flaschenreinigungsmaschine oder eine Reinigungsanlage (zum Beispiel eine Cleaning-in-Place-Reinigungsanlage) beziehungsweise jeglicher Kaltwasserverbraucher mit Verbindung zum Kaltwasser- und Eiswassertank 310 der Anlage zur Getränkeherstellung 300; unter Kaltwasserverbraucher sind im allgemeinen auch rekuperative Vorrichtungen wie etwa ein Pfannendunstkondensator zu verstehen. Beispiele für die Vorrichtung 380 oder eine Vorrichtung, die den Wärmetauscher 370 umfasst, sind eine Würzepfanne, eine Vorrichtung zur Heißtrubentfernung (beispielsweise ein Whirlpool), ein Würzekühler oder eine Wasserentgasungsanlage.

Gemäß einem sehr speziellen Beispiel kann die Vorrichtung 360 einer Brauereianlage 300 eine Würzepfanne, der Wärmetauscher 350 Teil eines Würzevorkühlers, die Vorrichtung 380 ein Whirlpool und der Wärmetauscher 370 Teil eines Würzekühlers sein, von dem Kaltwürze in den Keller geliefert wird.

Die einzelnen Prozessschritte, die innerhalb der Anlage 300 ausgeführt werden, können über eine Steuerungs-/Regeleinrichtung 390 gesteuert/geregelt werden.

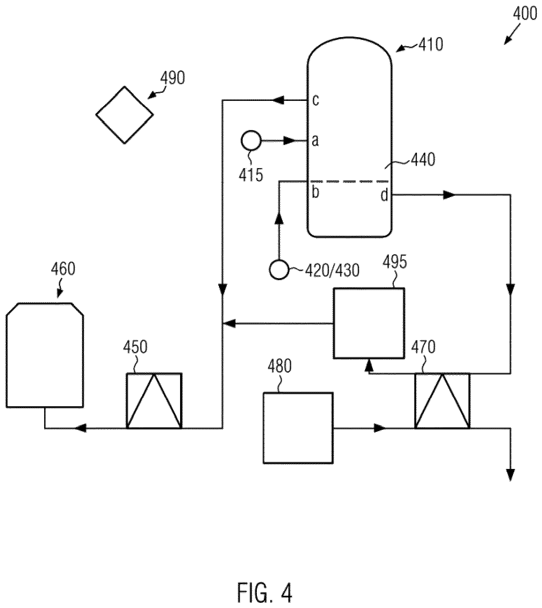

Eine weitere Anlage 400 zur Getränkeherstellung (beispielsweise eine Brauerei) mit einem Kaltwasser- und Eiswassertank 410, in der die oben beschriebenen Verfahren ausgeführt werden können, ist in Figur 4 veranschaulicht. Der Kaltwasser- und Eiswassertank 410 weist eine Einlass a auf, über den Kaltwasser aus einer Kaltwasserquelle 415 in den Kaltwasser- und Eiswassertank 410 eingeleitet werden kann. Weiterhin kann eine Quelle für Eiswasser 420 vorgesehen sein, die über einen weiteren Einlass b Eiswasser in den Kaltwasser- und Eiswassertank 410 liefert. Der Einlass b kann, anders als in Figur 4 gezeigt, alternativ an den ersten Teilbereich des Kaltwasser- und Eiswassertank 410 angeschlossen sein. Die Eigenschaften des Kaltwassers und des Eiswassers sind die gleichen, wie sie oben mit Bezug auf die Figuren 1 bis 3 beschrieben sind. Es kann auch ein einziger Einlass für das Einleiten sowohl des Kaltwassers als auch des Eiswassers in den Kaltwasser- und Eiswassertank 410 vorgesehen sein.

In einer alternativen Ausführungsform wird kein Eiswasser in den Kaltwasser- und Eiswassertank 410 geliefert, sondern es wird ein Teil des in den Kaltwasser- und Eiswassertank 410 gelieferten Kaltwassers auf Eiswassertemperatur gekühlt. Hierzu ist dann eine Quelle 430 für ein Kälteträgermedium vorgesehen, die das Kälteträgermedium durch einen Einlass b in eine im Kaltwasser- und Eiswassertank 410 angeordnete Leitung (beispielsweise Wendelleitung oder Zargen- und/oder Bodenkühlfläche) 440 liefert, sodass das Kaltwasser in der Umgebung der Leitung 440 gekühlt wird. Die Quelle 430 für das Kälteträgermedium kann eine Kälteanlage sein. Die Quelle 430 für das Kälteträgermedium kann aber beispielsweise auch eine Einrichtung zur Förderung von flüssigem CO₂ oder Bier aus dem Lagerkeller oder ein anderes Kälteträgermedium sein. Somit versteht es sich, dass auch mehrere Leitungen/Einrichtungen 440 für unterschiedliche Kälteträgermedien vorgesehen sein können. Wenn eine Quelle 420 für Eiswasser vorgesehen ist, die über einen Einlass b Eiswasser in den Kaltwasser- und Eiswassertank 410 liefert, dann kann das bedeuten, dass Kaltwasser von einer Kaltwasserquelle 415 einer Kälteanlage beziehungsweise einer rekuperativen Kühlmöglichkeit zugeführt wird und Kaltwasser mit einem Kälteträgermedium außerhalb des Kaltwasser- und Eiswassertanks 410 gekühlt wird oder das Kaltwasser oder Eiswasser aus dem ersten Teilbereich oder zweiten Teilbereich des Kaltwasser- und Eiswassertanks 410 abgezogen und einer Kälteanlage beziehungsweise einer rekuperativen Kühlmöglichkeit zugeführt wird und das Kaltwasser oder Eiswasser außerhalb des Kaltwasser- und Eiswassertanks mittels einem Wärmetauscher gekühlt wird.

Weiterhin umfasst der Kaltwasser- und Eiswassertank 410 einen Auslass c zum Ausleiten des in dem Kaltwasser- und Eiswassertank 410 gespeicherten Kaltwassers und einen Auslass d zum Ausleiten des in dem Kaltwasser- und Eiswassertank 410 gespeicherten Eiswassers.

Im unteren Bereich des Kaltwasser- und Eiswassertanks 410, beispielsweise in der Nähe des Bodens oder am Boden, kann eine Druck- und/oder Flüssigkeitsniveau-Messeinrichtung vorgesehen sein. Eine Flüssigkeitsniveau-Messeinrichtung kann sich zusätzlich oder alternativ auch in der Zarge des Kaltwasser- und Eiswassertanks 410 befinden. Wenn die Füllmenge des in dem Kaltwasser- und Eiswassertank 410 gespeicherten Kaltwassers und Eiswassers nach Ausleiten des Kaltwassers und/oder Eiswassers unter ein unteres Niveau fällt, kann ein geregeltes Einleiten von Kaltwasser und/oder Eiswasser veranlasst werden, beispielsweise bis das Kaltwasser ein oberes Niveau des Füllstands erreicht.

Das in dem Kaltwasser- und Eiswassertank 410 vorgehaltene Kaltwasser kann zur Getränkeherstellung/-abfüllung wie etwa zur Bierherstellung beziehungsweise der Reinigung der Vorrichtungen der Anlage 400, beispielsweise den in Figur 4 gezeigten Vorrichtung 460 oder mit einer solchen Vorrichtung verbundenen oder von dieser Vorrichtung umfassten Wärmetauschern, beispielsweise den in Figur 4 gezeigten Wärmetauscher 450, zugeleitet werden.

Das in dem Kaltwasser- und Eiswassertank 410 vorgehaltene Eiswasser kann zu Kühlzwecken Vorrichtungen der Anlage, beispielsweise den in Figur 4 gezeigten Vorrichtung 480, oder mit einer solchen Vorrichtung verbundenen oder von diesen Vorrichtungen umfassten Wärmetauschern, beispielsweise den in Figur 4 gezeigten Wärmetauscher 470, zugeleitet werden.

Die Wärmetauscher 450 und 470 können also insbesondere Teile von Vorrichtungen sein, denen das Kaltwasser beziehungsweise Eiswasser zu Verbrauchszwecken beziehungsweise Kühlzwecken zugeleitet wird, wobei diese Vorrichtungen von den Vorrichtungen 460 und 470 verschieden sein können oder auch nicht. So kann beispielsweise der Vorrichtung 460, zum Beispiel einem Läuterbottich, mithilfe von über den Auslass c des Kaltwasser- und Eiswassertanks 410 ausgeleiteten Kaltwassers über den optionalen Wärmetauscher 450 zugeführt werden. Im optionalen Wärmetauscher 450 kann das Kaltwasser auf die für den jeweiligen Prozess erforderliche Temperatur erwärmt werden. Im genannten Beispiel eines Läuterbottichs wird das Anschwänzwasser, welches für das Auswaschen des Treberkuchens benötigt wird, auf eine Temperatur von etwa 75 °C erwärmt. Der optionale Wärmetauscher 450 kann mit einem Energiespeichertank verbunden sein und die für die Erwärmung des Kaltwassers im Wärmetauscher 450 benötigte Energie, kann aus einem Energiespeichertank stammen. Der Wärmetauscher 450 kann mit einem beliebigen Heizmedium versorgt werden wie beispielsweise Dampf. Das Warmwasser für die Vorrichtung 460 kann jedoch auch aus dem Warmwassertank 495 stammen und vor der Zuführung in die Vorrichtung 460 in einer Mischeinrichtung (nicht gezeigt) mit Kaltwasser, welches aus dem Auslass c zum Ausleiten des in dem Kaltwasser- und Eiswassertank 410 befindlichen Kaltwasser stammt, gemischt werden, und zwar so, dass die erforderliche Temperatur erzielt wird. Ein in der Vorrichtung 480 bearbeitetes Medium (zum Beispiel Würze aus einer Heißtrubabscheidung, beispielhaft einem Whirlpool 480) kann mithilfe von über den Auslass d des Kaltwasser- und Eiswassertanks 410 ausgeleiteten Eiswassers über den Wärmetauscher 470 (zum Beispiel ein Würzekühler 470) gekühlt werden. Das dabei erwärme Eiswasser kann dann in einem Warmwassertank 495 zwischengelagert werden, bis es als Brauwasser oder Brauwasser zur Getränkeherstellung/-abfüllung, wie etwa der Bierherstellung oder Reinigung verwendet wird.

Beispiele für die Vorrichtung 460 sind hierbei eine Schrotmühle, Einmaischvorrichtung, ein Maischgefäß, Läuterbottich, Maischefilter, eine Würzepfanne, Wasserentgasungsanlage, eine Flaschenreinigungsmaschine oder eine Reinigungsanlage (zum Beispiel eine Cleaning-in-Place-Reinigungsanlage) beziehungsweise jeglicher Kaltwasserverbraucher mit Verbindung zum Kaltwasser- und Eiswassertank 410 der Anlage zur Getränkeherstellung 400.

Beispiele für die Vorrichtung 480 oder eine Vorrichtung, die den Wärmetauscher 470 umfasst, sind ein Würzevorkühler, Würzekühler, Maischekühler, Maischgefäß, eine Würzepfanne, Vorrichtung zur Heißtrubentfernung oder eine Wasserentgasungsanlage.

Gemäß einem sehr speziellen Beispiel kann die Vorrichtung 480 einer Brauereianlage 400 eine Vorrichtung zur Heißtrubentfernung, insbesondere Whirlpool, und der Wärmetauscher 470 Teil eines Würzekühlers sein, von dem Kaltwürze in den Keller geliefert wird.

Die einzelnen Prozessschritte, die innerhalb der Anlage 400 ausgeführt werden, können über eine Steuerungs-/Regeleinrichtung 490 gesteuert/geregelt werden.

In sämtlichen oben beschriebenen Ausführungsformen kann eine jeweils verwendete Messtechnik und/oder Steuerungs-/Regeleinrichtung dazu ausgebildet sein, in den Kaltwasser- und Eiswassertank eingeführte und aus dem Kaltwasser- und Eiswassertank ausgeführte Massenmengen und/oder Massenströme und/oder Energiemengen zu erfassen und entsprechende Massen- und/oder Energiebilanzen zu erstellen. So lässt sich beispielsweise bestimmen, ob eine Eiswasserproduktion zu Niedertarifzeiten (das heißt wenn zum Beispiel die elektrische Arbeit preiswert ist) oder zu Zeiten, in welcher in der Brauerei wenig elektrische Leistung angefordert wird, verschoben werden kann oder ob noch genügend Kaltwasser beziehungsweise Eiswasser in dem Kaltwasser- und Eiswassertank gespeichert ist oder Eiswasser auf Vorrat produziert werden sollte.

## Patentansprüche

1. Verfahren zur Bereitstellung von Kaltwasser und Eiswasser zur Getränkeherstellung, insbesondere Bierherstellung, mit den Schritten:
Bereitstellen eines Kaltwasser- und Eiswassertanks (310, 410) zum Speichern von Kaltwasser in einem ersten Teilbereich des Kaltwasser- und Eiswassertanks (310, 410) und von Eiswasser in einem zweiten Teilbereich des Kaltwasser- und Eiswassertanks (310, 410), der von dem ersten Teilbereich verschieden ist;
Leiten des Kaltwassers mit einer ersten Temperatur in den ersten und den zweiten Teilbereich des Kaltwasser- und Eiswassertank, wobei die erste Temperatur maximal 35 °C, insbesondere maximal 30 °C, beträgt; und
Kühlen des eingeleiteten Kaltwassers lediglich in dem zweiten Teilbereich, um lediglich in dem zweiten Teilbereich Eiswasser mit einer zweiten Temperatur bereitzustellen, die niedriger als die erste Temperatur ist und insbesondere 2 °C bis 12 °C oder bis 5 °C beträgt.

2. Verfahren zur Bereitstellung von Kaltwasser und Eiswasser zur Getränkeherstellung, mit den Schritten:
Bereitstellen eines Kaltwasser- und Eiswassertanks (310, 410) zum Speichern von Kaltwasser in einem ersten Teilbereich des Kaltwasser- und Eiswassertanks (310, 410) und von Eiswasser in einem zweiten Teilbereich des Kaltwasser- und Eiswassertanks (310, 410), der von dem ersten Teilbereich verschieden ist;
Leiten des Kaltwassers mit einer ersten Temperatur in den Kaltwasser- und Eiswassertank (310, 410), wobei die erste Temperatur maximal 35 °C, insbesondere maximal 30 °C, beträgt; und
Leiten des Eiswassers mit einer zweiten Temperatur lediglich in den zweiten Teilbereich des Kaltwasser- und Eiswassertanks (310, 410), um lediglich in dem zweiten Teilbereich Eiswasser bereitzustellen, wobei die zweite Temperatur niedriger als die erste Temperatur ist und insbesondere 2 °C bis 12 °C oder bis 5 °C beträgt.

3. Das Verfahren gemäß Anspruch 1, wobei das Kühlen ein Leiten von einem Kälteträgermedium, insbesondere von flüssigem CO₂ oder einem Getränk, beispielsweise Bier, durch eine in dem zweiten Teilbereich des Kaltwasser- und Eiswassertanks (310, 410) angeordnete Leitung umfasst.

4. Das Verfahren gemäß Anspruch 1 oder 3, wobei das Kühlen ein Kühlen mithilfe einer Kälteanlage (330, 430) umfasst.

5. Das Verfahren gemäß Anspruch 2, weiterhin mit Kühlen von Wasser außerhalb des Kalt- und Eiswassertanks (310, 410), um das Eiswasser vor dem Einleiten in den lediglich zweiten Teilbereich des Kaltwasser- und Eiswassertanks (310, 410) bereitzustellen, und wobei das Kühlen insbesondere mithilfe einer Kälteanlage erfolgt.

6. Das Verfahren gemäß Anspruch 5, wobei das außerhalb des Kaltwasser- und Eiswassertanks (310, 410) gekühlte Wasser aus dem Kaltwasser- und Eiswassertank (310, 410) geliefert wird.

7. Das Verfahren gemäß Anspruch 5 oder 6, wobei das Kühlen des Wassers außerhalb des Kaltwasser- und Eiswassertanks (310, 410) ein rekuperatives Kühlen, insbesondere mithilfe eines Getränks, insbesondere mithilfe eines Biers, und ein Kühlen des rekuperativ gekühlten Wassers mithilfe einer Kälteanlage umfasst.

8. Das Verfahren gemäß einem der vorhergehenden Ansprüche, weiterhin mit Ausleiten des Kaltwassers aus einem ersten Auslass (c) des ersten Teilbereichs des Kaltwasser- und Eiswassertanks (310, 410) und Zuführen des ausgeleiteten Kaltwassers zu einer ersten Vorrichtung (350, 360, 450, 460), wobei die erste Vorrichtung (350, 360, 450, 460) insbesondere ein Würzevorkühler, Maischekühler, eine Schrotmühle, Einmaischvorrichtung, ein Maischgefäß, Maischefilter, Läuterbottich, eine Würzepfanne, Einrichtung zum Entgasen von Wasser, eine Flaschenreinigungsmaschine oder eine Reinigungsanlage ist.

9. Das Verfahren gemäß einem der vorhergehenden Ansprüche, weiterhin mit Ausleiten des Eiswassers aus einem zweiten Auslass (d) des zweiten Teilbereichs des Kaltwasser- und Eiswassertanks (310, 410) und Zuführen des ausgeleiteten Eiswassers zu einer zweiten Vorrichtung (370, 380, 470, 480), wobei die zweite Vorrichtung (370, 380, 470, 480) insbesondere ein Würzekühler oder eine Einrichtung zum Entgasen von Wasser oder ein Maischekühler oder ein Würzevorkühler ist.

10. Das Verfahren gemäß Anspruch 9, mit Ausführen einer Würzekühlung von zumindest einem oder eineinhalb, zwei oder drei Suden mithilfe von aus dem Kaltwasser- und Eiswassertank (310, 410) gelieferten Eiswassers, wobei entweder
a) zu Beginn der Würzekühlung lediglich ein Teil des zur Würzekühlung benötigten Volumens an Eiswasser in dem Kaltwasser- und Eiswassertank (310, 410) gespeichert ist und der verbleibende Teil des zur Würzekühlung benötigten Volumens an Eiswasser im Verlauf der Würzekühlung in dem Kaltwasser- und Eiswassertank (310, 410) durch Einleiten von Eiswasser in den Kaltwasser- und Eiswassertank (310, 410) und/oder Kühlen von Kaltwasser in dem Kaltwasser- und Eiswassertank (310, 410) erzeugt wird;
oder
b) zu Beginn der Würzekühlung das gesamte zur Würzekühlung benötigte Volumen an Eiswasser in dem Kaltwasser- und Eiswassertank (310, 410) gespeichert ist.

11. Das Verfahren gemäß einem der vorhergehenden Ansprüche, weiterhin mit
Rückgewinnen thermischer Energie von einer dritten Vorrichtung; und
Zuführen der rückgewonnenen thermischen Energie zu lediglich dem ersten Teilbereich des Kaltwasser- und Eiswassertanks (310, 410), derart dass in diesem ersten Teilbereich zumindest teilweise Kaltwasser mit einer Temperatur von maximal 50 °C oder maximal 40 °C erzeugt wird.

12. Anlage (300, 400) zur Getränkeherstellung, insbesondere Bierherstellung, mit einem Kaltwasser- und Eiswassertank (310, 410); und
einer Steuerungs-/Regeleinrichtung (390, 490), die dazu ausgebildet ist, das Verfahren gemäß einem der vorhergehenden Ansprüche auszuführen.

13. Anlage (300, 400) zur Bierherstellung, insbesondere die Anlage (300, 400) gemäß Anspruch 12, mit
einem Kaltwasser- und Eiswassertank (310, 410) mit einem ersten Teilbereich und einem zweiten Teilbereich, der von dem ersten Teilbereich verschieden ist, zum Speichern von Kaltwasser mit einer ersten Temperatur von maximal 35 °C, insbesondere maximal 30 °C, in dem ersten Teilbereich des Kaltwasser- und Eiswassertanks (310, 410) und zum Speichern von Eiswasser mit einer zweiten Temperatur, die niedriger als die erste Temperatur ist und insbesondere 2 °C bis 12 °C oder bis 5 °C beträgt, in dem zweiten Teilbereich des Kaltwasser- und Eiswassertanks (310, 410).

14. Die Anlage (300, 400) gemäß Anspruch 13, in der der Kaltwasser- und Eiswassertank (310, 410) in dem ersten Teilbereich einen ersten Auslass (c) zum Ausleiten des Kaltwassers aus dem ersten Teilbereich und einen zweiten Auslass (d) zum Ausleiten des Eiswassers aus dem zweiten Teilbereich umfasst.

15. Die Anlage (300, 400) gemäß Anspruch 13 oder 14, weiterhin mit
a) einer Kälteanlage zum Kühlen des in dem zweiten Teilbereich des Kaltwasser- und Eiswasserstanks (310, 410) zu speichernden Eiswassers außerhalb des Kaltwasser- und Eiswasserstanks und/oder eine Kälteanlage um Kühlen des Kaltwassers in dem zweiten Teilbereich des Kaltwasser- und Eiswasserstanks (310, 410); oder
b) einer Einrichtung zum Zuführen von flüssigem CO₂ oder Bier, wobei der Kaltwasser- und Eiswasserstank (310, 410) eine in dem zweiten Teilbereich angeordnete Leitung (340, 440) umfasst, die mit der Einrichtung zum Zuführen von flüssigem CO₂ oder Bier verbunden ist.
